(19) Europäisches Patentamt / European Patent Office / Office européen des brevets

(11) **EP 2 959 456 B1**

(12) **EUROPEAN PATENT SPECIFICATION**

(45) Date of publication and mention
of the grant of the patent:
**06.02.2019 Bulletin 2019/06**

(51) Int Cl.:
*G06T 7/521* (2017.01)    *H04N 13/00* (2018.01)
*G06T 7/593* (2017.01)

(21) Application number: **14709042.7**

(22) Date of filing: **19.02.2014**

(86) International application number:
**PCT/US2014/017009**

(87) International publication number:
**WO 2014/130489 (28.08.2014 Gazette 2014/35)**

(54) **REAL TIME STEREO MATCHING**

ECHTZEIT-STEREOANPASSUNG

MISE EN CORRESPONDANCE STÉRÉOSCOPIQUE EN TEMPS RÉEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.02.2013 US 201313775179**

(43) Date of publication of application:
**30.12.2015 Bulletin 2015/53**

(73) Proprietor: **Microsoft Technology Licensing, LLC
Redmond, WA 98052 (US)**

(72) Inventors:
• **RHEMANN, Christoph**
  **Redmond, Washington 98052-6399 (US)**
• **ZACH, Christopher**
  **Redmond, Washington 98052-6399 (US)**
• **ROTHER, Carsten Curt Eckard**
  **Redmond, Washington 98052-6399 (US)**
• **BLEYER, Michael**
  **Redmond, Washington 98052-6399 (US)**
• **WHYTE, Oliver**
  **Redmond, Washington 98052-6399 (US)**
• **IZADI, Shahram**
  **Redmond, Washington 98052-6399 (US)**
• **KIRK, Adam Garnet**
  **Redmond, Washington 98052-6399 (US)**

(74) Representative: **CMS Cameron McKenna Nabarro
Olswang LLP
Cannon Place
78 Cannon Street
London EC4N 6AF (GB)**

(56) References cited:
EP-A2- 0 915 433        WO-A2-98/47061
WO-A2-2012/073057      US-A1- 2012 206 573

• **FUA PASCAL: "A parallel stereo algorithm that
produces dense depth maps and preserves
image features", MACHINE VISION AND
APPLICATIONS, SPRINGER VERLAG, DE, vol. 6,
1 January 1993 (1993-01-01), pages 35-49,
XP002475536, ISSN: 0932-8092, DOI:
10.1007/BF01212430**
• **Michael Bleyer ET AL: "PatchMatch Stereo -
Stereo Matching with Slanted Support Windows",
Procedings of the British Machine Vision
Conference 2011, 1 January 2011 (2011-01-01),
pages 14.1-14.11, XP055114350, DOI:
10.5244/C.25.14 ISBN: 978-1-90-172543-8**
• **BARNES C ET AL: "PatchMatch: A randomized
correspondence algorithm for structural image
editing", ACM TRANSACTIONS ON GRAPHICS (,
ACM, US, vol. 28, no. 3, 27 July 2009 (2009-07-27),
pages 1-10, XP007914256, ISSN: 0730-0301, DOI:
10.1145/1531326.1531330**

**Description**

## BACKGROUND

Stereo matching is a process whereby two images (a stereo image pair) of a scene taken from slightly different viewpoints are matched to find disparities (differences in position) of image elements which depict the same scene element. The disparities provide information about the relative distance of the scene elements from the camera. Stereo matching enables disparities to be computed and so depths of surfaces of objects in an environment to be found. A stereo camera comprising two image capture devices at a known distance apart may be used to capture the stereo image pair.

Stereo matching is computationally complex because of the large number of possible matches to be searched; an image element in the left image of a stereo pair may match any of the image elements of the right image of the stereo pair. Various approaches to stereo matching, also called the stereo correspondence problem, have been developed and typically there is a trade-off between accuracy of results and the speed and resources needed to make the calculation.

One approach, referred to as active stereo, involves illuminating the scene with a pattern of illumination comprising dots, blobs, lines or other patterns. The illumination pattern is captured in the stereo image pair by a stereo camera and may be used to help reduce the complexity of the stereo correspondence problem.

Fua Pascal "A parallel stereo algorithm that produces dense depth maps and preserves image features" in Machine vision and applications, Springer Verlag, DE vol 6, 1 January 1993 pages 35-49 describes a parallel stereo algorithm that relies on correlation followed by interpolation. To generate a dense depth map, information is propagated across featureless areas, but not across discontinuities, by an interpolation scheme that takes image grey levels into account to preserve image features.

Michael Bleyer et al. "PatchMatch Stereo - stereo matching with slanted support windows", in Proceedings of the British Machine Vision Conference 2011, 1 January 2011 describes a stereo method which matches support windows. An individual 3D plane is estimated using the PatchMatch algorithm at each pixel onto which the support region is projected. View propagation where planes are propagated among left and right view of the stereo pair, and temporal propagation where planes are propagated from preceding and consecutive frames of a video are described.

Barnes C et al. "PatchMatch: a randomized correspondence algorithm for structural image editing" in ACM Transactions on Graphics vol 28, no. 3, 27 July 2009 describes interactive image editing tools using a randomized algorithm for quickly finding approximate nearest neighbor matches between image patches. Some good patch matches are found via random sampling, and natural coherence in the imagery allows propagation of such matches to surrounding areas.

The embodiments described below are not limited to implementations which solve any or all of the disadvantages of known stereo matching processes.

## SUMMARY

The following presents a simplified summary of the disclosure in order to provide a basic understanding to the reader. This summary is not an extensive overview of the disclosure and it does not identify key/critical elements or delineate the scope of the specification. Its sole purpose is to present a selection of concepts disclosed herein in a simplified form as a prelude to the more detailed description that is presented later.

Real-time stereo matching is described, for example, to find depths of objects in an environment from an image capture device capturing a stream of stereo images of the objects. For example, the depths may be used to control augmented reality, robotics, natural user interface technology, gaming and other applications. Streams of stereo images, or single stereo images, obtained with or without patterns of illumination projected onto the environment are processed using a parallel-processing unit to obtain depth maps. In various embodiments a parallel-processing unit propagates values related to depth in rows or columns of a disparity map in parallel. In examples, the values may be propagated according to a measure of similarity between two images of a stereo pair; propagation may be temporal between disparity maps of frames of a stream of stereo images and may be spatial within a left or right disparity map.

Many of the attendant features will be more readily appreciated as the same becomes better understood by reference to the following detailed description considered in connection with the accompanying drawings.

## BRIEF DESCRIPTION OF THE DRAWINGS

The present description will be better understood from the following detailed description read in light of the accompanying drawings, wherein:

FIG. 1 shows a stereo camera (either active or passive) capturing a stream of stereo image pairs of objects in an environment and illustrates schematically a real-time stereo matching engine computing disparity values for input to a game system, augmented reality system, natural user interface, robotic system or other system;

FIG. 2 is a schematic diagram of a stereo image pair of a tree and a illustrates how stereo matching may be used to compute a disparity of the tree;

FIG. 3 is a schematic diagram of an active stereo camera arrangement;

FIG. 4 is a flow diagram of an example method at the stereo matching engine of FIG. 1;

FIG. 5 is a flow diagram of a method of computing a disparity map from a single stereo image pair;

FIG. 6 is a flow diagram of an example of the temporal propagation process of FIG. 4 in more detail;

FIG. 7 is a flow diagram of an example of the spatial propagation process of FIG. 4 in more detail;

FIG. 8 is a schematic diagram of an example forward and backward pass for spatial propagation;

FIG. 9 is a flow diagram of a method of checking for erroneous disparities in a disparity map;

FIG. 10 illustrates an exemplary computing-based device in which embodiments of real-time stereo matching may be implemented.

Like reference numerals are used to designate like parts in the accompanying drawings.

## DETAILED DESCRIPTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

Although the present examples are described and illustrated herein as being implemented in a stereo system with a stream of stereo images, the system described is provided as an example and not a limitation. As those skilled in the art will appreciate, the present examples are suitable for application in a variety of different types of stereo systems including active and passive stereo systems in which a single stereo pair is processed independently of other stereo pairs.

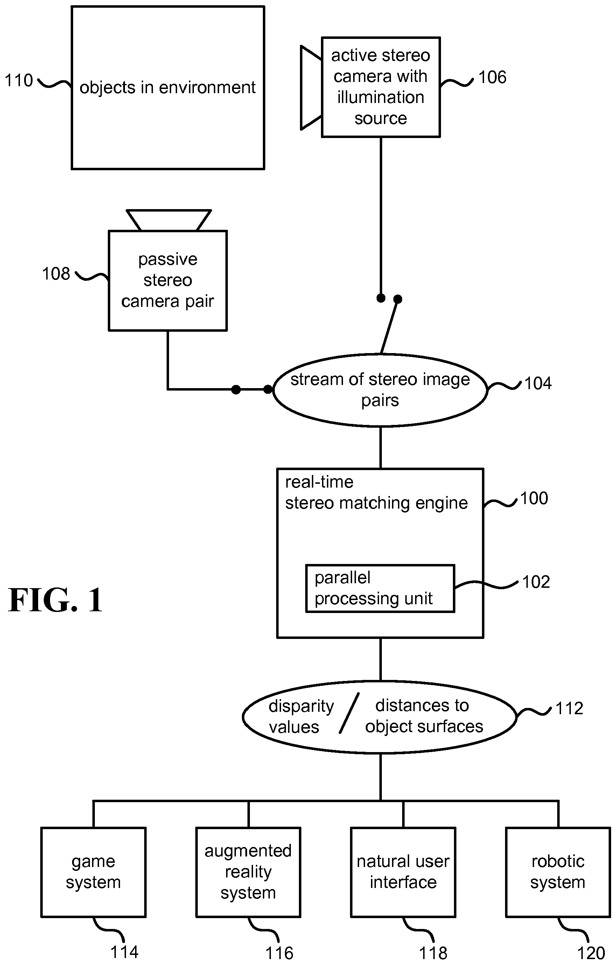

FIG. 1 shows a passive stereo camera pair 108 which may be used to capture a stream of stereo image pairs 104 of objects in an environment 110. The passive stereo camera pair 108 may be moving in the environment or may be fixed. The passive stereo camera pair 108 comprises two image capture devices separated from one another by a known distance and arranged so that their fields of view overlap substantially. The image capture devices may be infra-red cameras, RGB cameras, or other types of camera.

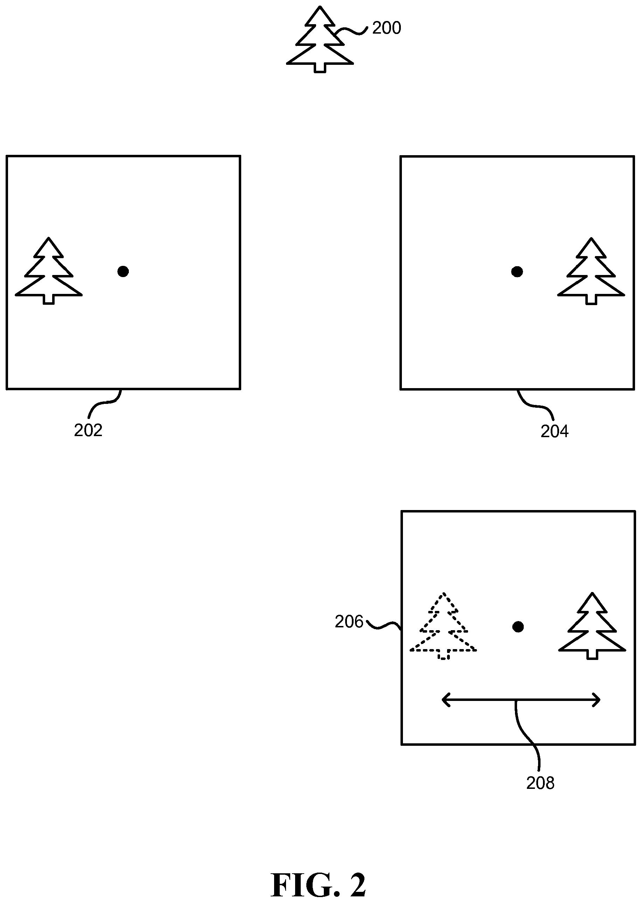

FIG. 2 also shows an active stereo camera pair 106 which may be used in place of the passive stereo camera pair 108 to capture the stream of stereo image pairs 104. The active stereo camera 106 has an associated illumination source which may be integral with the active stereo camera 106 or may be separate and located elsewhere in the environment. The associated illumination source is able to project a pattern of illumination onto the objects in the environment 110. For example, infra-red illumination, visible light or other illumination. The pattern of illumination may comprise blobs, lines, grids, or other patterns. The active stereo camera 106 comprises two image capture devices separated from one another by a known distance and arranged so that their fields of view overlap substantially. The image capture devices are able to capture an image of the objects in the scene illuminated by the illumination source. For example, where the illumination is infra-red the image capture devices may be infra-red cameras.

The stream of stereo image pairs, whether from the passive or from the active stereo camera, is input to a real-time stereo matching engine 100 comprising a parallel processing unit 102. In some examples, the real-time stereo matching engine 100 may also process a stereo pair that is not part of a stream of stereo images. The real-time stereo matching engine 100 calculates disparity values 112 of image elements of input stereo images. These disparity values are related to distances from the stereo camera to surfaces of objects depicted by the image elements. The disparity values may be used by a game system 114, an augmented reality system 116, a natural user interface 118, a robotic system 120 or any other system which uses information about distances of object surfaces in an environment. An image element may be a pixel, voxel, plurality of pixels or plurality of voxels.

The real-time stereo matching engine 100 may be integral with the stereo camera (active or passive) or may be located at another entity which is able to receive the stream of stereo images. The real-time stereo matching engine 100 is implemented using a computer and the parallel processing unit 102 may be a graphics processing unit, a program-specific integrated circuit (ASIC), a field-programmable gate array (FPGA), or any other parallel processing unit.

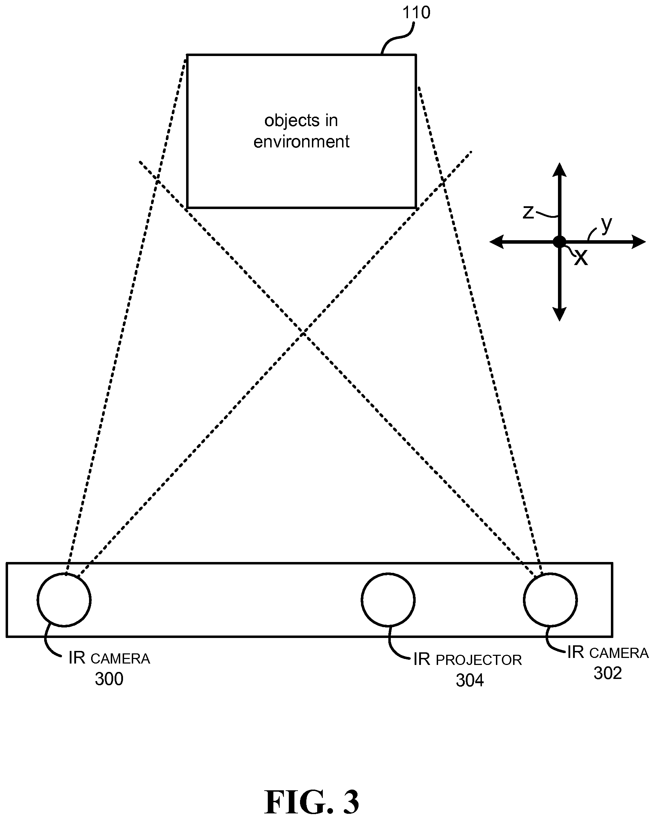

The concept of stereo matching to find disparity values is now described at high level with reference to FIG. 2 to aid understanding of the examples described in this document. FIG. 2 is a schematic diagram of a stereo image pair comprising a left image 202 and a right image 204 of a scene comprising a tree 200. A stereo camera (not shown in FIG. 2) used to capture the stereo image pair comprises two image capture devices separated from one another so as to have captured the left and right images respectively as illustrated. A dot in the center of the left and right images is shown to aid explanation. In the left image 202 the image of the tree 200 is to the left of the dot; in the right image 204 the image of the tree is to the right of the dot. When the left and right images are superimposed as at composite image 206 the image of the tree from the left image is shown using dotted lines. The image element which depicts the base of the tree from the left image is said to correspond to the image element which depicts the base of the tree from the right image. The distance between these corresponding image elements is shown at arrow 208 and represents the disparity between these image elements which may be measured in units of pixel or other image element. The disparity value 208 is related to the distance or depth of the tree 200 from the image capture devices. Finding which image elements of the left image correspond with which image elements of the right image is computationally complex especially for high resolution images. The arrangement of FIG. 2 is an example of passive stereo matching because the scene (i.e. the tree and its environment) are not illuminated with an active source of illumination such as a pattern of infra-red dots. The examples of stereo matching described in this document are applicable to both active and passive stereo matching and so an example set up for active stereo is now described with reference to FIG. 3.

FIG. 3 is a schematic diagram of an active stereo camera arrangement such as the active stereo camera 106 of FIG. 1 in more detail. The arrangement comprises at least two image capture devices separated from one another, for example, by being fixed to a rail or other support. In the example of FIG. 3 the image capture devices are infra-red (IR) cameras 300. However, other types of image capture device may be used such as RGB cameras. The image capture devices may be genlocked or synchronized to enable an image to be captured at the same point in time at each image capture device. The image capture devices are positioned such that their fields of view overlap. As illustrated in FIG. 3 each image capture device 300 is able to capture an image of objects in the environment 110 despite each image capture device having a different view point.

The active stereo camera arrangement also comprises an illumination source such as an IR projector 304, visible light source, or other illumination source capable of projecting a pattern of illumination on to the objects in the environment 110. The illumination source may be arranged to project a random dot pattern or other pattern of illumination onto the objects in the environment 110. The genlocked image capture devices may be used to capture image of the objects in the environment including a random pattern of IR dots or other illumination pattern projected onto the surfaces of the objects. For example, the IR cameras may output greyscale images where each image element comprises a single intensity value.

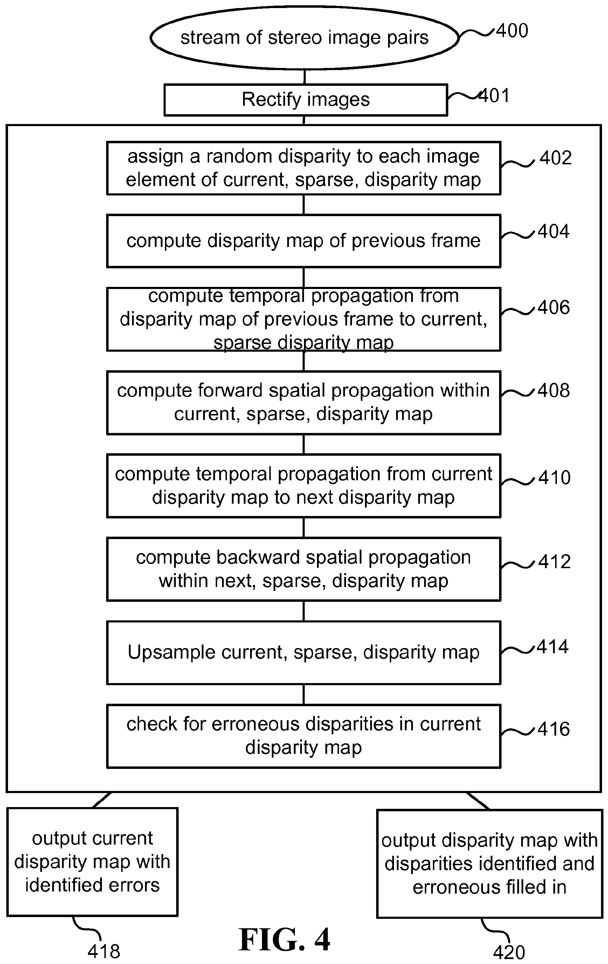

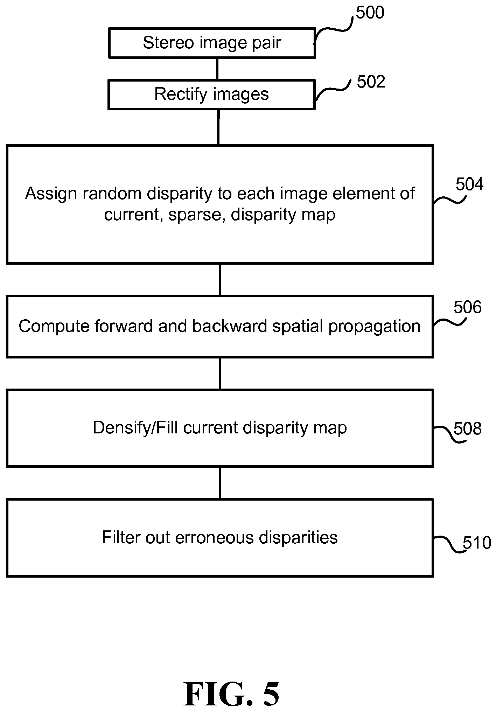

FIG. 4 is a flow diagram of an example method at the stereo matching engine of FIG. 1. In this example a stream of stereo image pairs 400 are received or input to the stereo matching engine. The stream comprises frames, each frame being a stereo image pair. In other examples, such as that described below with reference to FIG. 5, the stereo matching engine processes a stereo image pair which is not from a stream of stereo images.

The stereo image pairs may be rectified 401 such that vertical disparities are minimized and may be ignored. In this way, an image element on a given row in the left stereo image will have its corresponding image element (i.e. the image element which depicts the same surface location in the environment) somewhere on the same row in the right stereo image. Any suitable process for rectifying the stereo image pairs may be used.

The stereo matching engine initializes a disparity map for one stereo image from the current frame. This disparity map is the output which the stereo matching engine aims to compute. Initially the disparity map for the current frame contains random values; that is, the stereo matching engine assigns 402 a random disparity to sub-sample of the image elements of the current disparity map, in order to create a low resolution current disparity map. The stereo matching engine may overwrite these initial random values with ones it computes as being more accurate as described in more detail below. The random values may be assigned in such a way that these values are within a user definable range and so that the assigned values represent that range.

To reduce computation time and resources, the stereo matching engine may use a sparse grid of image elements such as a sparse pixel grid. The sparse pixel grid may be formed by sub-sampling the image horizontally and vertically by a specified factor. Initial random disparity values may be assigned to the sparse pixel grid to form a sparse disparity map and the propagation steps described below may operate on the sparse disparity map. In a local propagation step the sparse disparity map may be densified. The scale of the sub-sampling may be set according to a minimum object size (in terms of image elements) for which depth information is desired. For example, assuming a fixed minimum object size in terms of pixels, the examples below are able to propagate at half that pixel size to improve performance. For example, if the smallest object to be reconstructed is 2n image elements, the propagation may be computed for every nth image element and still find the object.

A disparity map comprises, for each image element of a stereo image, a disparity value (which may be a continuous value such as a floating point value in some examples or which may be an integer value in other examples). The disparity value is related to the distance from the camera to the surface in the environment which the image element depicts. A disparity map may be a 2D array corresponding to its associated stereo image, or it may be stored in another form such as a list or other data structure.

The stereo matching engine computes 404 a disparity map of one of the stereo images of the previous frame or accesses a disparity map of a previous frame from memory. For example, the disparity map of the previous frame may have been computed by any of the methods described herein or other stereo matching methods, and stored in memory. An example of a method of computing the disparity map of a stereo image which may be used is explained in more detail below with reference to FIG. 5.

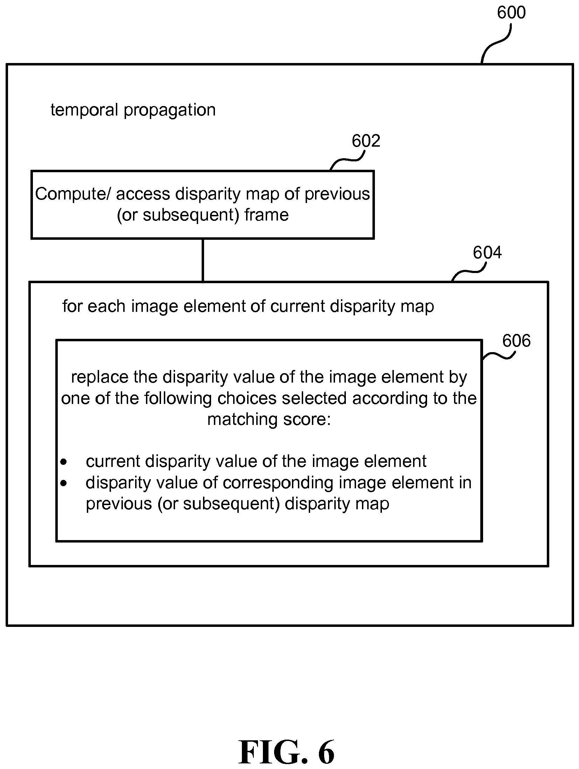

The stereo matching engine computes a temporal propagation 406 in a first temporal direction, such as from the disparity map of the previous frame to the current disparity map (taking into account the sparse nature of the current disparity map mentioned above where appropriate). This enables randomly assigned disparity values of the current disparity map to be overwritten with more accurate values where appropriate. An example of a temporal propagation process which may be used is described below with reference to FIG. 6. The temporal propagation may also take in to account disparity maps of other previous frames.

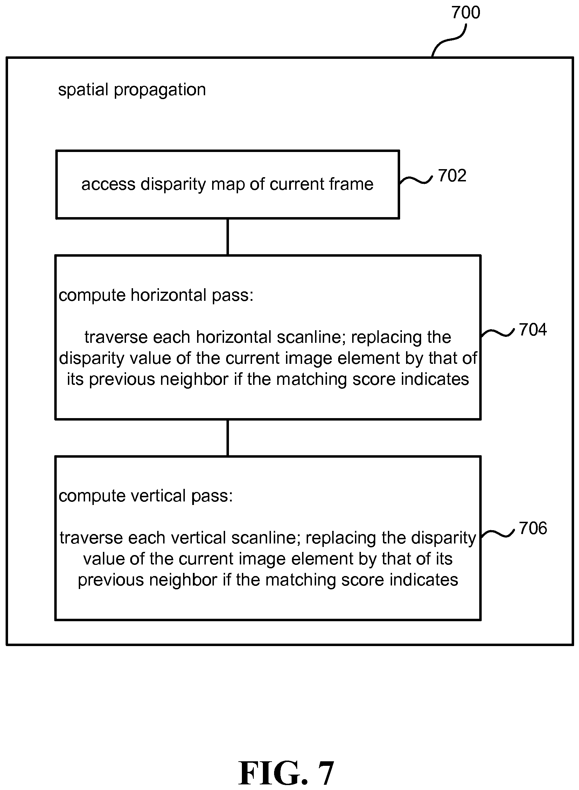

The stereo matching engine computes a spatial propagation 408 (in a first spatial direction such as forwards) within the current, sparse, disparity map. An example of a spatial propagation method which may be used is described with reference to FIG. 7. This enables disparity values of the current disparity map to be overwritten with more accurate values where appropriate.

The stereo matching engine may compute a temporal propagation 410 from the current disparity map to the next disparity map as part of the process of computing the next disparity map. It then computes a second spatial propagation 412 in a second spatial direction (different from the first spatial direction) such as backwards within the next disparity map.

The current, sparse disparity map may be filled 414. For example, propagation produces a sparse disparity map where disparity values are available at every nth image element. This may be considered a square grid of disparity values in the image, where image elements on the grid intersections have disparities from propagation. An image element within a cell in the grid has no disparity value until it is filled. During filling of a high-resolution image element not computed during propagation, the disparity values at the four closest sparse grid intersections (or corners) may be considered as possible disparity candidates. In addition a disparity value interpolated from the disparity values at the four grid intersections may also be taken into account. For example, the similarity measure may be computed for each of the five disparity values and used to select a disparity value to use for filling. The computations required for obtaining these five similarity measures are partially redundant for neighboring image elements, because the patches over which the similarity score is computed are overlapping. This redundancy may be exploited to further reduce the computational effort. This is one possible example, other disparity values from the sparse disparity map may be used.

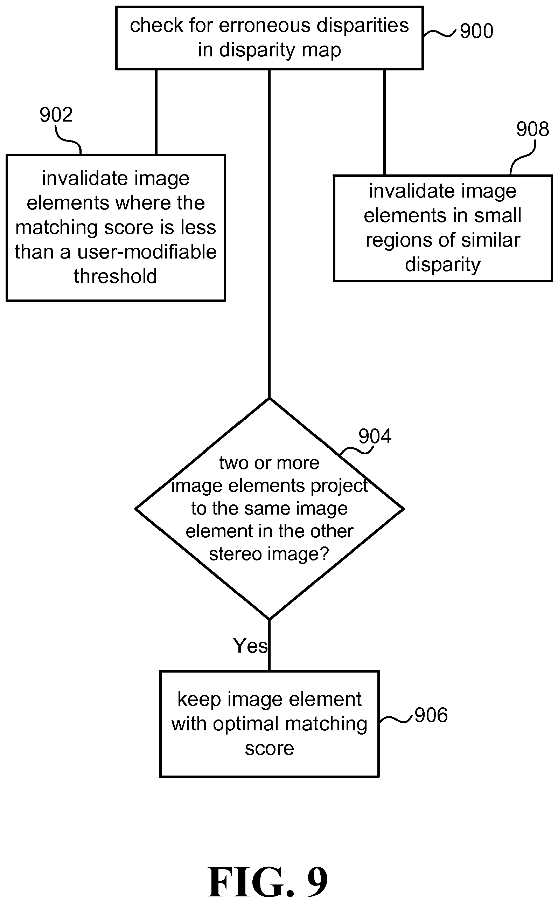

A check 416 is then made for erroneous disparities in the current disparity map. This is described in more detail with reference to FIG. 9. The stereo matching engine outputs the current disparity map with any identified errors 418. In another example, it may output the current disparity map with any disparities which are identified as erroneous filled in with estimated values 420. This is described in more detail later in this document.

An example of a method of computing the disparity map of a stereo image that is not part of a stream of stereo images is now described with reference to FIG. 5. In this example, a stereo image pair 500 is accessed or received and rectified 502 as mentioned above in order to minimize any vertical disparities. A random disparity value is assigned 504 to a sub-sample of the image elements of a disparity map in the same way as described above with reference to box 402 of FIG. 4. A forward spatial propagation 506 is computed and a backward spatial propagation where these spatial propagation steps are as described below with reference to FIG.s 7 and 8. These propagation steps may operate on a sparse disparity map. The propagation process enables randomly assigned disparity values within the disparity map which turn out to be good guesses, to be propagated within the disparity map. Densifying or filling 508 may be applied to the sparse disparity map as described above with reference to box 414 of FIG. 4. A filtering step may be applied to mark as invalid any disparity values which are identified as erroneous. This filtering step is described in more detail below with reference to FIG. 9.

The runtime of the approaches described above with reference to FIGs. 4 and 5 is independent of the number of disparities and is able to process high-resolution stereo images in real time. For example, by using windows to compute the matching score in a single pass optionally with subsampling of the window and by using a parallelized process to compute the propagation. Higher resolution images carry a larger number of disparity proposals and enable a single iteration (random assignment and propagation) to give accurate results. Having said that, the examples described herein are also workable for low resolution stereo images. In addition, the processes described herein are found to degrade gracefully between active and passive illumination and where illumination becomes poor or saturated.

In examples where active stereo is used, more than one stereo camera may be used without any risk of interference between active stereo camera arrangements. Also, the stereo camera arrangements used may be low cost compared to custom time-of-flight sensors.

The stereo matching processes described herein have a relatively low memory footprint. In traditional stereo algorithms, the space of possible disparities is typically sampled uniformly for every image element. The disparity samples are held in memory before making a decision. Where a subpixel disparity sampling is used for high quality, the result is a very large memory footprint (for example, sampling several hundred disparity levels at every 0.5 disparities). In contrast, the example methods described herein may retain only the current optimal hypothesized disparity in memory. This makes it possible to compute depth maps on high resolution images with a much smaller memory footprint.

The propagation processes described below with reference to FIG.s. 6 to 8 use a measure of similarity (also referred to as a matching score) between the left and right stereo images of a stereo pair. Any suitable measure of similarity may be used. For example, a measure of similarity of image elements in a region, patch, window or other group of image elements in the left image and a corresponding region, patch, window or other group of image elements in the right image. In the examples described herein the term window is used to refer to a region, patch, area or group of image elements. The window may be rectangular, square or of any other shape. The window size, shape or type may vary from image element to image element. The measure of similarity may take into account intensity values of image elements in the window; color values of image elements in the window; or other higher level image features such as lines, edges, blobs, textures. A non-exhaustive list of examples of similarity measures which may be used is: sum of squared differences, normalized cross-correlation, zero mean normalized cross-correlation.

In some examples the measure of similarity may be a zero mean normalized cross-correlation (ZNCC) score. An example of a ZNCC score is given below for matching pixel p at disparity d:

$$m(p,d) = \frac{\sum_{q \in W_p}(I_q - \overline{I_p}) \cdot (I'_{q-d} - \overline{I'_{p-d}})}{\sqrt{\sum_{q \in W_p}(I_q - \overline{I_p})^2 \cdot \sum_{q \in W_p}(I'_{q-d} - \overline{I'_{p-d}})^2}}$$

The symbol $W_p$ represents a window centered at pixel p; the size of the window may be user adjustable or may be set during a manufacturing stage. The symbols $I_p$ and $I'_p$ denote pixel p's intensity in the left and right images of a stereo pair respectively. The symbol $\overline{I_p}$ represents the mean intensity in a patch centered on p. The pixel coordinate that is derived by subtracting the disparity d from pixel p's x-coordinate is denoted *p - d*.

The above equation may be expressed in words as: a matching score (which expresses how accurate a disparity value d is for a given pixel p of one image from a stereo pair) is equal to a sum over pixels q in a window centered at pixel p, of a dot product of, the difference between q's intensity in the left image and the mean intensity of a patch at p in the left image, and the difference between the intensity at location q-d in the right image and the mean intensity of a patch around location p-d in the right image, normalized by a cross-correlation so that the score is between -1 and 1 with 1 being a good match. The contribution of each image element inside the matching window to the similarity score may be weighted. The weight for each image element may be adjusted taking into account intensity values of image elements in the window, color values of image elements in the window, or any other image features. For example, the weight of an image element may depend on its intensity similarity to the image element centered at the window.

In many practical applications, illumination differences between the left and right stereo images are present and the matching score may be arranged to take this into account. For example, the example ZNCC score described above achieves this because of the normalization and enables the stereo matching engine to be robust to illumination differences in left and right images. However, other matching scores may be used such as the sum of squared differences. The matching score (such as the ZNCC and the sum of squared differences) may be arranged to be calculated using a single scan over the window, accumulating comparisons of the individual image elements, and then using these values to compute a single cost.

In examples where disparity d is a float value, linear interpolation may be applied to derive the intensities of matching points in the right image. The linear interpolation may be achieved by storing the left and right stereo images in a GPU texture buffer.

In order to speed up computation of the matching score, sub-sampling may be applied to the matching window $W_p$. For example, a sample (or subset) of image elements q from the window $W_p$ may be used rather than all the image elements q in the window $W_p$. The sampled image elements may be based on a regular grid, or may be randomly selected or selected in other ways.

In some examples the computation of the matching score is speeded up by performing the calculation using a single pass over the sampled image elements within the window. This may be achieved by formulating the ZNCC score in such a manner that it may be calculated in only one pass over the pixels within the window. This may lower the runtime of the matching score calculation by a factor of two.

The propagation processes are now described in more detail. These involve using information from one or more neighbors of an image element to decide whether and how to update the disparity value at that image element. In each example propagation is arranged so that when an image element is processed and its neighbor(s) examined, the neighbor(s) which are to be examined have already undergone the propagation process.

FIG. 6 is a flow diagram of an example of a temporal propagation process 600 which may be used as part of the method of FIG. 4. Temporal propagation comprises using information from a frame which is either forwards or backwards in a chronological sequence of frames (such as the stream of stereo image pairs 104 of FIG. 1) with respect to a current frame, to update or overwrite information in the current frame. The updating or overwriting may happen or not happen according to the matching score or other criteria.

The temporal propagation process comprises computing 602 a disparity map of a previous or a subsequent frame. This may be achieved using the method of FIG. 5 for example or by accessing previous results from memory. For each image element of the current disparity map 604 the temporal propagation process replaces 606 the disparity value of the image element by one of the following choices, selected according to the matching score: the current disparity value of the image element (i.e. no change); and the disparity value of the corresponding image element (the image element at the same x,y coordinate position in the image) in the previous or subsequent disparity map. In this way the temporal propagation process enables information from a previous or subsequent frame to be used to overwrite disparity values of the current disparity map in the case where the matching score indicates this would improve accuracy. The process of checking whether an update is appropriate and making that update when the check is successful, may be carried out in parallel for each image element of the current disparity map. That is, the temporal propagation steps may be parallelized at the level of an image element. In this way computation time is significantly reduced as compared with serial computation.

FIG. 7 is a flow diagram of an example of a spatial propagation process 700 which may be used as part of the method of FIG. 4. Spatial propagation comprises using information within a disparity map to update or overwrite other information in the current disparity map which is at a different spatial location within the disparity map. The updating or overwriting may happen or not happen according to the matching score or other criteria. The disparity map is traversed in an ordered sequence and the updating or overwriting occurs during the traversal. To achieve reduced computation time, the spatial propagation process may be parallelized as described in more detail below. It is also possible to carry out spatial propagation on a sparse disparity map to achieve performance improvements.

A disparity map of the current frame is accessed 702. For example, this may be a disparity map initialized with random values and which has had temporal propagation applied from the disparity map of the previous frame. A single horizontal pass 704 is computed in a given direction. For example, the horizontal pass may comprise a plurality of horizontal scanlines; each for one row of the disparity map. Spatial propagation for a horizontal scanline may be computed by a single thread of a multi-threaded process at a parallel processing unit. This enables the horizontal pass 704 to be computed quickly. Each horizontal scanline is traversed in a given direction (such as forwards or backwards) and at each image element location in the scanline, the disparity value is replaced by the value of a previous neighbor if the matching score indicates the previous neighbor as having a more accurate disparity value than the current disparity value. The previous neighbor may be the image element location in the disparity map that is on the scanline and is immediately prior to the current location.

A single vertical pass 706 is computed in a given direction (such as up or down). For example, the vertical pass may comprise a plurality of vertical scanlines; each for one column of the disparity map. Spatial propagation for a vertical scanline may be computed by a single thread of a multi-threaded process at a parallel processing unit. This enables the vertical pass 706 to be computed quickly. Each vertical scanline is traversed in a given direction (such as up or down) and at each image element location in the scanline, the disparity value is replaced by the value of a previous neighbor if the matching score indicates the previous neighbor as having a more accurate disparity value than the current disparity value. In some examples the horizontal pass and the vertical pass may be computed in parallel.

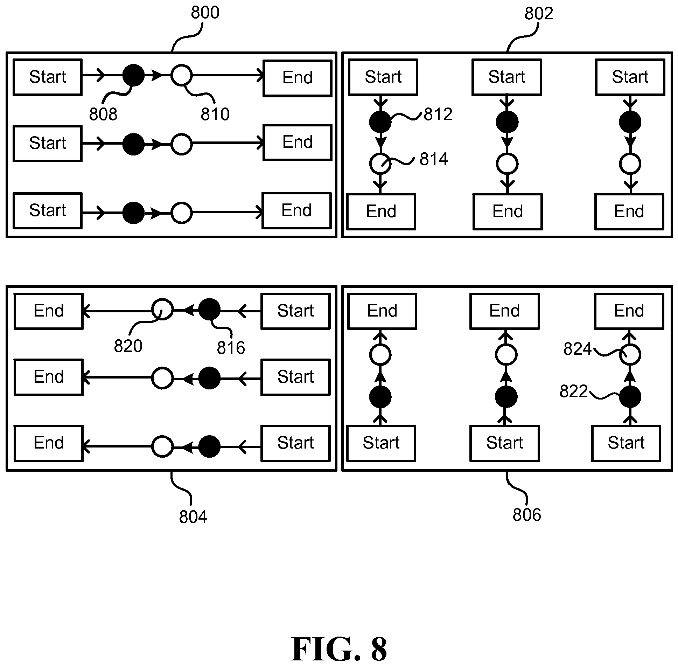

FIG. 8 is a schematic diagram of spatial propagation scanlines. In box 800 a single horizontal pass comprising traversal in a left to right direction of three horizontal scanlines is illustrated. A disparity value at image element location 808 may be used to update location 810 if the matching score indicates this is appropriate. In box 802 a single vertical pass comprising traversal in a downwards direction of three vertical scanlines is illustrated. A disparity value at image element location 812 may be used to update location 814 if the matching score indicates this is appropriate.

As indicated in the example of FIG. 4 spatial and temporal propagation may be interleaved. For example, the spatial propagation of box 408 may comprise a single horizontal pass and a single vertical pass (in first directions such as forwards and down) as indicated in boxes 800 and 802 of FIG. 8 on frame N. Temporal propagation from frame N to frame N+1 may then be applied followed by a second spatial propagation on frame N+1 comprising a single horizontal pass and a single vertical pass (in second directions such as backwards and up) as indicated in boxes 804 and 806 of FIG. 8.

FIG. 9 is a flow diagram of a method for checking 900 for erroneous values in a disparity map. This may also be considered a filtering method to filter out spurious disparity values and either mark them as invalid or fill them with more appropriate values. The method may comprise invalidating 902 image elements on the basis of the matching score, for example, where the matching score (which may be any of the similarity measures described above) is less than a user modifiable threshold. For example, a user may set the threshold using a graphical user interface input element such as a data entry box, drop down menu, slider bar or other element. The threshold may be adjusted according to the application domain, the noise level in the environment, the sensitivity of the image capture devices, ambient illumination, the amount of texture in the environment, the amount of occlusion in the scene, and other factors. The threshold may be dynamically adjusted using an automated process.

In some examples, a check 904 is made as to whether two or more image elements of one of the stereo images, project to the same image element of the other stereo image, according to the disparity map. If so, the matching scores of the two or more image elements are used to select one image element to retain whilst the others are invalidated. This method uses the disparity map of one of the stereo images rather than disparity maps for both stereo images.

Spurious disparities may exhibit as small isolated regions of similar disparity. For example, peppered noise over the disparity map. One approach is to invalidate 908 image elements of the disparity map which are in small regions of similar disparity. The disparity map may be segmented into regions of similar disparity using any suitable segmentation process such as connected component labeling. A user-definable parameter for segment size may be used to identify segments which are to be invalidated.

In some examples, the invalidated disparity values are filled in with estimated disparity values. For example, one or more neighbors of an image element with an invalidated disparity are assessed for their matching scores. The invalidated disparity value is then filled on the basis of the matching scores. For example, by copying the value of the neighbor with the optimal matching score or by taking an aggregate of the neighboring values weighted by their matching scores.

Alternatively, or in addition, the functionality described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), Graphics Processing Units (GPUs).

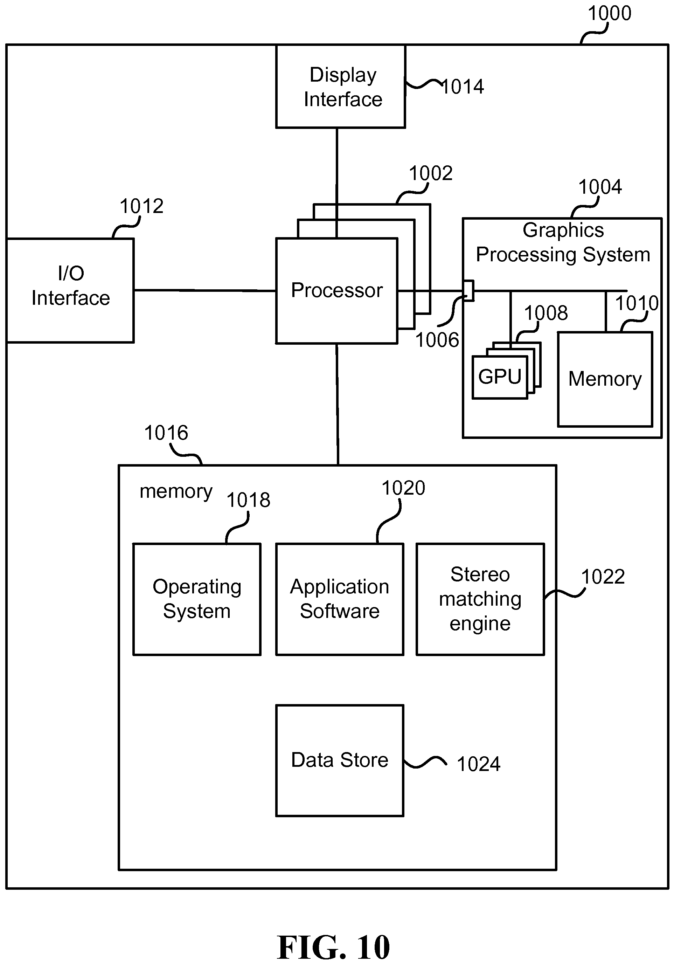

FIG. 10 illustrates various components of an exemplary computing-based device 1000 which may be implemented as any form of a computing and/or electronic device, and in which embodiments of a stereo matching engine may be implemented.

Computing-based device 1000 comprises one or more processors 1002 which may be microprocessors, controllers or any other suitable type of processors for processing computer executable instructions to control the operation of the device in order to compute depth maps from stereo image pairs or streams of stereo image pairs, which may or may not comprise active illumination patterns. In some examples, for example where a system on a chip architecture is used, the processors 1002 may include one or more fixed function blocks (also referred to as accelerators) which implement a part of the method of stereo matching in hardware (rather than software or firmware). Platform software comprising an operating system 1018 or any other suitable platform software may be provided at the computing-based device to enable application software 1020 to be executed on the device.

The computing-based device 1000 also comprises a graphics processing system 1004, which communicates with the processors 1002 via a communication interface 1006 and comprises one or more graphics processing units 1008 which are arranged to execute parallel, threaded operations in a fast and efficient manner. The graphics processing system 1004 also comprises a memory device 1010 which is arranged to enable fast parallel access from the graphics processing units 1008. In examples the graphics processing units 1008 may perform the spatial and temporal propagation processes.

The computer executable instructions may be provided using any computer-readable media that is accessible by computing based device 1000. Computer-readable media may include, for example, computer storage media such as memory 1016 and communications media. Computer storage media, such as memory 1016, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Therefore, a computer storage medium should not be interpreted to be a propagating signal per se. Propagated signals may be present in a computer storage media, but propagated signals per se are not examples of computer storage media. Although the computer storage media (memory 1016) is shown within the computing-based device 1000 it will be appreciated that the storage may be distributed or located remotely and accessed via a network or other communication link.

The computing-based device 1000 also comprises display interface 1014 arranged to output display information to a display device which may be separate from or integral to the computing-based device 1000. The display information may provide a graphical user interface which may receive user input, for example, to set thresholds, parameter values, specify stereo image sources, view depth and disparity maps and for other purposes.

An input/output interface 1012 is also arranged to receive and process input from one or more devices, such as one or more stereo cameras or other image capture devices. The input/output interface 1012 may be arranged to control an IR projector or other illumination source where active stereo arrangements are used.

The input/output interface 1012 may be arranged to receive and process input from a user input device (e.g. a mouse, keyboard, camera, microphone or other sensor). In some examples the user input device may detect voice input, user gestures or other user actions and may provide a natural user interface (NUI). In an embodiment a display device may also act as the user input device if it is a touch sensitive display device. The input/output interface 1012 may also output data to other devices such as a locally connected printing device or other entities on a communications network.

Any of the input/output interface 1012 and display interface 1014 may comprise NUI technology which enables a user to interact with the computing-based device in a natural manner, free from artificial constraints imposed by input devices such as mice, keyboards, remote controls and the like. Examples of NUI technology that may be provided include but are not limited to those relying on voice and/or speech recognition, touch and/or stylus recognition (touch sensitive displays), gesture recognition both on screen and adjacent to the screen, air gestures, head and eye tracking, voice and speech, vision, touch, gestures, and machine intelligence. Other examples of NUI technology that may be used include intention and goal understanding systems, motion gesture detection systems using depth cameras (such as stereoscopic camera systems, infrared camera systems, rgb camera systems and combinations of these), motion gesture detection using accelerometers/gyroscopes, facial recognition, 3D displays, head, eye and gaze tracking, immersive augmented reality and virtual reality systems and technologies for sensing brain activity using electric field sensing electrodes (EEG and related methods).

The term 'computer' or 'computing-based device' is used herein to refer to any device with processing capability such that it can execute instructions. Those skilled in the art will realize that such processing capabilities are incorporated into many different devices and therefore the terms 'computer' and 'computing-based device' each include PCs, servers, mobile telephones (including smart phones), tablet computers, set-top boxes, media players, games consoles, personal digital assistants and many other devices.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible storage media include computer storage devices comprising computer-readable media such as disks, thumb drives, memory etc. and do not include propagated signals. Propagated signals may be present in a tangible storage media, but propagated signals per se are not examples of tangible storage media. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

Any range or device value given herein may be extended or altered without losing the effect sought, as will be apparent to the skilled person.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The steps of the methods described herein may be carried out in any suitable order, or simultaneously where appropriate. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments.

**Claims**

1. A method comprising:

   receiving at a processor a pair of stereo images (104) of objects in an environment captured by an image capture device;
   computing, using a parallel processing unit (102), a disparity map from the stereo images (104), the disparity map comprising values related to depths of the objects from the image capture device; by
   traversing, in parallel using a multi-threaded process, a plurality of rows or a plurality of columns of the disparity map and spatially propagating values at image elements of the disparity map along the rows or columns according to a measure of similarity between the stereo images (104); and wherein spatially propagating the values comprises using one thread per row or per column and replacing a disparity value at a current location of a row or column only by the value of a previous neighbor on the row or column.

2. A method as claimed in claim 1 comprising initializing the disparity map with random values.

3. A method as claimed in claim 1 where traversing, in parallel, comprises propagating values at a subsample of image elements of the disparity map, the subsample of image elements being a sparse disparity map.

4. A method as claimed in claim 1 or claim 2 wherein the measure of similarity between the stereo images (104) is computed for a window of image elements around one or more neighbors of a current image element of the disparity map.

5. A method as claimed in any preceding claim comprising temporally propagating values between disparity maps of stereo images from a stream of stereo image pairs (104) and interleaving spatial and temporal propagation.

6. A method as claimed in any preceding claim comprising filtering the disparity map by identifying erroneous disparity values according to any one or more of: a measure of similarity between the stereo images (104) at a region associated with the location of the disparity value in the disparity map; identifying erroneous disparity values where two or more image elements of one stereo image project to the same image element in the other stereo image according to the disparity map; identifying erroneous disparity values according to size of segments of the disparity map having similar disparity values.

7. A stereo-matching engine (100) comprising:

   a processor arranged to receive a pair of stereo images (104) of objects in an environment captured by an image capture device;
   a parallel processing unit (102) arranged to compute a disparity map from the stereo images using a multi-threaded process, such that the disparity map comprises values related to depths of the objects from the image capture device; the parallel processing unit (102) arranged to compute the disparity map by traversing, in parallel, a plurality of rows or a plurality of columns of the disparity map and spatially propagating values at image elements of the disparity map along the rows or columns according to a measure of similarity between the stereo images; the parallel processing unit arranged such that spatially propagating the values comprises using one thread per row or per column and replacing a disparity value at a current location of a row or column only by the value of a previous neighbor on the row or column

8. A stereo-matching engine (100) as claimed in claim 7 the parallel processing unit (102) arranged to compute the measure of similarity between the stereo images for a window of image elements by making a single pass over image elements of the window.

9. A stereo-matching engine (100) as claimed in claim 7 or claim 8 arranged so that the traversing in parallel is in an order such that the one or more neighbors of the current image element of the disparity map have already been traversed.

**10.** A stereo matching engine (100) as claimed in any of claims 7 to 9 arranged to temporally propagate values between disparity maps of stereo images from a stream of stereo image pairs and to interleave spatial and temporal propagation.

**11.** A stereo matching engine (100) as claimed in any of claims 7 to 10 at least partially implemented using hardware logic selected from any one or more of: a field-programmable gate array, a program-specific integrated circuit, a program-specific standard product, a system-on-a-chip, a complex programmable logic device, a graphics processing unit.

**Patentansprüche**

**1.** Verfahren, umfassend:

Empfangen eines Paares von Stereobildern (104) von Objekten in einer Umgebung, die von einer Bilderfassungsvorrichtung erfasst werden, an einem Prozessor;
Berechnen einer Disparitätskarte aus den Stereobildern (104) unter Verwendung einer Parallelverarbeitungseinheit (102), wobei die Disparitätskarte Werte umfasst, die sich auf die Tiefen der Objekte der Bilderfassungsvorrichtung beziehen; durch
paralleles Durchlaufen einer Vielzahl von Reihen oder einer Vielzahl von Spalten der Disparitätskarte unter Verwendung eines Multithread-Prozesses und räumliche Ausbreitung von Werten an Bildelementen der Disparitätskarte entlang der Reihen oder Spalten gemäß einem Ähnlichkeitsmaß zwischen den Stereobildern (104); und wobei die räumliche Ausbreitung der Werte das Verwenden eines Threads pro Reihe oder pro Spalte und das Ersetzen eines Disparitätswerts an einer aktuellen Position einer Reihe oder Spalte nur durch den Wert eines vorherigen Nachbarn in der Reihe oder Spalte umfasst.

**2.** Verfahren nach Anspruch 1, umfassend das Initialisieren der Disparitätskarte mit zufälligen Werten.

**3.** Verfahren nach Anspruch 1, wobei das parallele Durchlaufen das Ausbreiten von Werten bei einer Teilprobe von Bildelementen der Disparitätskarte umfasst, wobei die Teilprobe von Bildelementen eine spärliche Disparitätskarte ist.

**4.** Verfahren nach Anspruch 1 oder 2, wobei das Ähnlichkeitsmaß zwischen den Stereobildern (104) für ein Fenster von Bildelementen um einen oder mehrere Nachbarn eines aktuellen Bildelements der Disparitätskarte berechnet wird.

**5.** Verfahren nach einem der vorstehenden Ansprüche, umfassend zeitliche Ausbreitungswerte zwischen Disparitätskarten von Stereobildern aus einem Strom von Stereobildpaaren (104) und Verschachteln der räumlichen und zeitlichen Ausbreitung.

**6.** Verfahren nach einem der vorstehenden Ansprüche, umfassend das Filtern der Disparitätskarte durch Identifizieren fehlerhafter Disparitätswerte gemäß einem oder mehreren von: einem Ähnlichkeitsmaß zwischen den Stereobildern (104) in einem Bereich, die der Position des Disparitätswerts in der Disparitätskarte zugeordnet ist; dem Identifizieren fehlerhafter Disparitätswerte, bei denen zwei oder mehr Bildelemente eines Stereobildes auf das gleiche Bildelement in dem anderen Stereobild gemäß der Disparitätskarte projizieren; dem Identifizieren fehlerhafter Disparitätswerte gemäß der Größe von Segmenten der Disparitätskarte, die ähnliche Disparitätswerte aufweist.

**7.** Stereoabgleichvorrichtung (100), umfassend:

einen Prozessor, der angeordnet ist, um ein Paar von Stereobildern (104) von Objekten in einer von einer Bilderfassungsvorrichtung erfassten Umgebung zu empfangen;
eine Parallelverarbeitungseinheit (102), die angeordnet ist, um eine Disparitätskarte aus den Stereobildern unter Verwendung eines Multithread-Prozesses zu berechnen, sodass die Disparitätskarte Werte enthält, die sich auf die Tiefen der Objekte von der Bilderfassungsvorrichtung beziehen; wobei die Parallelverarbeitungseinheit (102) angeordnet ist, um die Disparitätskarte zu berechnen, indem sie parallel eine Vielzahl von Reihen oder einer Vielzahl von Spalten der Disparitätskarte durchläuft und Werte an Bildelementen der Disparitätskarte entlang der Reihen oder Spalten entsprechend einem Ähnlichkeitsmaß zwischen den Stereobildern räumlich ausbreitet; wobei die parallele Verarbeitungseinheit so angeordnet ist, dass das räumliche Ausbreiten der Werte das Verwenden eines Threads pro Reihe oder Spalte und das Ersetzen eines Disparitätswerts an einer aktuellen Position einer Reihe oder Spalte nur durch den Wert eines vorherigen Nachbarn in der Reihe oder Spalte umfasst.

8. Stereoabgleichvorrichtung (100) nach Anspruch 7, wobei die Parallelverarbeitungseinheit (102) angeordnet ist, um das Ähnlichkeitsmaß zwischen den Stereobildern für ein Fenster von Bildelementen zu berechnen, indem sie einen einzigen Durchlauf über Bildelemente des Fensters durchführt.

9. Stereoabgleichvorrichtung (100) nach Anspruch 7 oder Anspruch 8, die so angeordnet ist, dass das parallele Durchlaufen in einer solchen Reihenfolge erfolgt, dass der eine oder die mehreren Nachbarn des aktuellen Bildelements der Disparitätskarte bereits durchlaufen wurden.

10. Stereoabgleichvorrichtung (100) nach einem der Ansprüche 7 bis 9, die angeordnet ist, um Werte zwischen Disparitätskarten von Stereobildern aus einem Strom von Stereobildpaaren zeitlich auszubreiten und die räumliche und zeitliche Ausbreitung zu verschachteln.

11. Stereoabgleichvorrichtung (100) nach einem der Ansprüche 7 bis 10, die zumindest teilweise unter Verwendung einer Hardwarelogik implementiert ist, ausgewählt aus einem oder mehreren von: einem feldprogrammierbaren Gate-Array, einer programmspezifischen integrierten Schaltung, einem programmspezifischen Standardprodukt, einem System-on-a-Chip, einer komplexen programmierbaren Logikvorrichtung, einer Grafikverarbeitungseinheit.

**Revendications**

1. Procédé comprenant :

   la réception au niveau d'un processeur d'un couple d'images stéréoscopiques (104) d'objets dans un environnement capturé par un dispositif de capture d'image ;
   le calcul, en utilisant une unité de traitement parallèle (102), d'une carte de disparité à partir des images stéréoscopiques (104), la carte de disparité comprenant des valeurs liées à des profondeurs des objets en provenance du dispositif de capture d'image ; par
   la traversée, en utilisant en parallèle un processus multifil, d'une pluralité de rangées ou d'une pluralité de colonnes de la carte de disparité et la propagation dans l'espace de valeurs au niveau d'éléments d'image de la carte de disparité le long des rangées ou colonnes selon une mesure de similitude entre les images stéréoscopiques (104) ; et dans lequel la propagation dans l'espace des valeurs comprend l'utilisation d'un fil par rangée ou par colonne et le remplacement d'une valeur de disparité au niveau d'un emplacement courant d'une rangée ou colonne seulement par la valeur d'un voisin précédent sur la rangée ou colonne.

2. Procédé selon la revendication 1 comprenant l'initialisation de la carte de disparité avec des valeurs aléatoires.

3. Procédé selon la revendication 1 où la traversée, en parallèle, comprend la propagation de valeurs au niveau d'un sous-échantillon d'éléments d'image de la carte de disparité, le sous-échantillon d'éléments d'image étant une carte de disparité clairsemée.

4. Procédé selon la revendication 1 ou la revendication 2, dans lequel la mesure de similitude entre les images stéréoscopiques (104) est calculée pour une fenêtre d'éléments d'image autour d'un ou plusieurs voisins d'un élément d'image courant de la carte de disparité.

5. Procédé selon n'importe quelle revendication précédente comprenant des valeurs se propageant de façon temporelle entre des cartes de disparité d'images stéréoscopiques à partir d'un flot de couples d'images stéréoscopiques (104) et l'entrelacement de la propagation spatiale et temporelle.

6. Procédé selon n'importe quelle revendication précédente comprenant le filtrage de la carte de disparité en identifiant des valeurs de disparité erronées selon l'une quelconque ou plusieurs de : une mesure de similitude entre les images stéréoscopiques (104) au niveau d'une région associée à l'emplacement de la valeur de disparité dans la carte de disparité; l'identification de valeurs de disparité erronées où deux ou plusieurs éléments d'image d'une image stéréoscopique particulière se projettent sur le même élément d'image dans l'autre image stéréoscopique selon la carte de disparité ; l'identification de valeurs de disparité erronées selon la taille de segments de la carte de disparité ayant des valeurs de disparité similaires.

**7.** Moteur d'adaptation stéréoscopique (100) comprenant :

un processeur agencé pour recevoir un couple d'images stéréoscopiques (104) d'objets dans un environnement capturé par un dispositif de capture d'image ;

une unité de traitement parallèle (102) agencée pour calculer une carte de disparité à partir des images stéréoscopiques en utilisant un processus multifil, de sorte que la carte de disparité comprend des valeurs liées à des profondeurs des objets en provenance du dispositif de capture d'image ; l'unité de traitement parallèle (102) agencée pour calculer la carte de disparité en traversant, en parallèle, une pluralité de rangées ou une pluralité de colonnes de la carte de disparité et propageant dans l'espace des valeurs au niveau d'éléments d'image de la carte de disparité le long des rangées ou colonnes selon une mesure de similitude entre les images stéréoscopiques; l'unité de traitement parallèle étant agencée de sorte que la propagation dans l'espace des valeurs comprend l'utilisation d'un seul fil par rangée ou colonne et le remplacement d'une valeur de disparité au niveau d'un emplacement courant d'une rangée ou colonne seulement par la valeur d'un voisin précédent sur la rangée ou colonne.

**8.** Moteur d'adaptation stéréoscopique (100) selon la revendication 7, l'unité de traitement parallèle (102) étant agencée pour calculer la mesure de similitude entre les images stéréoscopiques pour une fenêtre d'éléments d'image en faisant un passage simple sur des éléments d'image de la fenêtre.

**9.** Moteur d'adaptation stéréoscopique (100) selon la revendication 7 ou la revendication 8 agencé de sorte que la traversée en parallèle est dans un certain ordre de sorte que le ou les plusieurs voisins de l'élément d'image courant de la carte de disparité ont déjà été traversés.

**10.** Moteur d'adaptation stéréoscopique (100) selon l'une quelconque des revendications 7 à 9 agencé pour propager temporellement des valeurs entre des cartes de disparité d'images stéréoscopiques à partir d'un flot de couples d'images stéréoscopiques et pour entrelacer une propagation spatiale et temporelle.

**11.** Moteur d'adaptation stéréoscopique (100) selon l'une quelconque des revendications 7 à 10 mis en oeuvre au moins partiellement en utilisant une logique matérielle sélectionnée à partir de l'un quelconque ou de plusieurs de : un circuit intégré prédiffusé programmable, un circuit intégré spécifique à un programme, un produit standard spécifique à un programme, un système embarqué sur la puce, un dispositif logique programmable complexe, une unité de traitement graphique.

110 ⟳ objects in environment

active stereo camera with illumination source ⟳ 106

108 ⟳ passive stereo camera pair

stream of stereo image pairs ⟳ 104

real-time stereo matching engine ⟳ 100

parallel processing unit ⟳ 102

**FIG. 1**

disparity values / distances to object surfaces ⟳ 112

game system ⟳ 114

augmented reality system ⟳ 116

natural user interface ⟳ 118

robotic system ⟳ 120

**FIG. 2**

**FIG. 3**

stream of stereo image pairs 400

Rectify images 401

assign a random disparity to each image element of current, sparse, disparity map 402

compute disparity map of previous frame 404

compute temporal propagation from disparity map of previous frame to current, sparse disparity map 406

compute forward spatial propagation within current, sparse, disparity map 408

compute temporal propagation from current disparity map to next disparity map 410

compute backward spatial propagation within next, sparse, disparity map 412

Upsample current, sparse, disparity map 414

check for erroneous disparities in current disparity map 416

output current disparity map with identified errors 418

output disparity map with disparities identified and erroneous filled in 420

FIG. 4

Stereo image pair — 500

Rectify images — 502

Assign random disparity to each image element of current, sparse, disparity map — 504

Compute forward and backward spatial propagation — 506

Densify/Fill current disparity map — 508

Filter out erroneous disparities — 510

# FIG. 5

600

temporal propagation

602

Compute/ access disparity map of previous (or subsequent) frame

604

for each image element of current disparity map

606

replace the disparity value of the image element by one of the following choices selected according to the matching score:

- current disparity value of the image element
- disparity value of corresponding image element in previous (or subsequent) disparity map

**FIG. 6**

700

spatial propagation

access disparity map of current frame    ~ 702

compute horizontal pass:

    traverse each horizontal scanline; replacing the    ~ 704
disparity value of the current image element by that of
 its previous neighbor if the matching score indicates

compute vertical pass:

traverse each vertical scanline; replacing the disparity    ~ 706
    value of the current image element by that of its
    previous neighbor if the matching score indicates

# FIG. 7

**FIG. 8**

check for erroneous disparities
in disparity map 900

902

invalidate image
elements where the
matching score is less
than a user-modifiable
threshold

908

invalidate image
elements in small
regions of similar
disparity

904

two or more
image elements project
to the same image
element in the other
stereo image?

Yes

keep image element
with optimal matching
score 906

FIG. 9

1000

Display
Interface 1014

1012

I/O
Interface

1002

Processor

1004

Graphics
Processing System

1006

1008

1010

GPU

Memory

1016

memory 1018

1020

Operating
System

Application
Software

Stereo
matching
engine

1022

Data Store 1024

**FIG. 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A parallel stereo algorithm that produces dense depth maps and preserves image features. **FUA PASCAL.** Machine vision and applications. Springer Verlag, 01 January 1993, vol. 6, 35-49
- **MICHAEL BLEYER et al.** PatchMatch Stereo - stereo matching with slanted support windows. *Proceedings of the British Machine Vision Conference 2011,* 01 January 2011

- **BARNES C et al.** PatchMatch: a randomized correspondence algorithm for structural image editing. *ACM Transactions on Graphics,* 27 July 2009, vol. 28 (3